# EUROPÄISCHE PATENTSCHRIFT

(11) **EP 3 544 757 B1**
(45) Veröffentlichungstag und Bekanntmachung des Hinweises auf die Patenterteilung: **04.01.2023**
(21) Anmeldenummer: 17812070.5
(22) Anmeldetag: 21.11.2017
(51) Int. Cl.: B23B 3/16, B23B 3/32, B23B 13/04

(54) **DREHMASCHINE UND VERFAHREN ZUM DREHEN VON WERKSTÜCKEN**
TURNING MACHINE AND METHOD FOR TURNING WORKPIECES
TOUR ET PROCÉDÉ PERMETTANT DE FAIRE TOURNER DES PIÈCES À USINER

(30) Priorität: 25.11.2016 DE 102016122746
(43) Veröffentlichungstag der Anmeldung: 02.10.2019
(73) Patentinhaber: Ensinger GmbH, 71154 Nufringen (DE)
(72) Erfinder: NASS, Fred, 93444 Bad Kötzting (DE)
(74) Vertreter: Maiwald GmbH
(86) Internationale Anmeldenummer: PCT/IB2017/057281
(87) Internationale Veröffentlichungsnummer: WO 2018/096444

(56) Entgegenhaltungen:
- EP-A1- 0 506 209
- EP-A1- 1 155 764
- EP-A2- 1 193 027
- WO-A1-2008/098713
- DE-A1- 2 951 565
- JP-A- S6 186 102
- JP-A- H02 298 403
- JP-A- S62 282 802

## Beschreibung

### Gebiet der Erfindung

Die vorliegende Erfindung betrifft eine Drehmaschine, insbesondere eine CNC-Drehmaschine mit einer ersten Spindel und einer zweiten Spindel. Weiterhin betrifft die Erfindung Verfahren zum Drehen von Werkstücken in der vorgenannten Drehmaschine.

### Technologischer Hintergrund

Übliche Drehmaschinen zur Fertigung von Präzisionsteilen weisen neben einer Hauptspindel mit voller Funktion eine Nebenspindel mit eingeschränkter Funktion auf, d. h. bei der Nebenspindel handelt es sich in der Regel um keine vollwertige Spindel mit eigenem Stangenlader. Ebenfalls können Drehmaschinen mit einem oder mit mehreren Werkzeugrevolvern ausgestattet sein. Diese Drehmaschinen bearbeiten allerdings lediglich ein Stück pro Zeiteinheit. Daraus kann der Nachteil entstehen, dass bei einer Bearbeitung bestimmter Werkstücke bzw. Halbzeuge teure Anlagenkomponenten nicht effizient bzw. gar nicht genutzt werden, oder eine Bearbeitung in mehreren Stufen u.a. auch mit einem Wechsel der Bearbeitungsmaschine erfolgen muss. So sind insbesondere CNC-Drehmaschinen mit einer Hauptspindel und mit einer Gegenspindel bekannt, wobei sich in einem Bearbeitungsraum je nach Ausstattung der CNC-Drehmaschine mehrere Werkzeugrevolver befinden (derzeit sind ein bis drei Werkzeugrevolver möglich). In diese Werkzeugrevolver werden Werkzeughalter mit Bearbeitungswerkzeugen eingesetzt, mit welchen die Werkstücke eingespannt in Spannvorrichtungen (Spannzangen, Dreibackenfutter oder ähnliches) der Hauptspindel und/oder der Nebenspindel bearbeitet werden.

Die Hauptspindel befindet sich in der Regel auf der linken Seite der CNC-Drehmaschine. Die Hauptspindel ist innen hohl, so dass man mit einem Stangenlademagazin, welches sich dann ebenfalls auf der linken Seite der Maschine befindet, Stangenmaterial zum Bearbeiten in den Bearbeitungsraum einbringen kann. Das Stangenmaterial wird in der Regel mit einer Spannzange der ersten Spindel gespannt und anschließend wird unter Rotation der ersten Spindel eine erste Seite des Stangenmaterials bearbeitet. Wenn die erste Seite des zugeführten Stangenmaterials fertig bearbeitet worden ist, kann das Stangenmaterial von der Gegenspindel automatisch übernommen und in einer Spannvorrichtung der Nebenspindel gespannt werden. Sofern jedoch ein Durchmesser des zu bearbeitenden Materials größer ist als eine "lichte Weite" der Hauptspindel, müssen diese Teile von Hand oder mit einem Roboter in die Spannvorrichtung der Hauptspindel und/oder der Nebenspindel eingelegt werden. Die fertig bearbeiten Teile müssen in diesem Fall ebenfalls wieder per Hand oder mit einem Roboter entnommen werden. Nach dem Übernehmen und Spannen kann ein Drehteil von dem zugeführten Stangenmaterial mit einem Abstechmeißel abgestochen und anschließend eine zweite Seite des Drehteils unter Rotation der zweiten Spindel weiter- bzw. fertigbearbeitet werden. Die fertigen Drehteile werden in der Regel mit einem kleinen Förderband aus dem Bearbeitungsraum der CNC-Drehmaschine abtransportiert.

EP 0 506 209 A1 offenbart eine Drehmaschine mit den Merkmalen des Oberbegriffs des unabhängigen Anspruchs 1. Dieses Dokument offenbart ebenfalls ein Verfahren zum Drehen von Werkstücken mit dieser Drehmaschine.

Es ist eine Aufgabe der vorliegenden Erfindung, eine Drehmaschine und ein Verfahren der eingangs genannten Art bereitzustellen, welche eine besonders effiziente Bearbeitung von Werkstücken beziehungsweise Halbzeugen ermöglichen.

### Zusammenfassung der Erfindung

Die Aufgabe wird gelöst durch die Gegenstände der unabhängigen Patentansprüche. Vorteilhafte Ausführungsformen sind Bestandteil der Unteransprüche, der folgenden Beschreibung sowie der Figuren.

Gemäß einem ersten Aspekt der Erfindung wird eine Drehmaschine gemäß unabhängigem Anspruch 1 bereitgestellt, insbesondere eine CNC-Drehmaschine oder eine NC-Drehmaschine. Die Drehmaschine umfasst eine in Rotation versetzbare erste Spindel zum Einspannen und Rotieren eines ersten zu drehenden Halbzeugs und eine der ersten Spindel gegenüberliegende, in Rotation versetzbare zweite Spindel zum Einspannen und Rotieren eines zweiten zu drehenden Halbzeugs. Der ersten Spindel ist ein erstes Stangenlademagazin zugeordnet, welches dazu eingerichtet ist, das erste Halbzeug durch eine erste Öffnung der ersten Spindel in einen zwischen den Spindeln befindlichen Bearbeitungsraum zu fördern. Der zweiten Spindel ist nunmehr ein zweites Stangenlademagazin zugeordnet, welches dazu eingerichtet ist, das zweite Halbzeug durch eine zweite Öffnung der zweiten Spindel in den Bearbeitungsraum zu fördern. Bevorzugt sind die erste Spindel und die zweite Spindel um eine gemeinsame Rotationsachse in Rotation versetzbar. Weiterhin ist bevorzugt zumindest eine der beiden Spindeln entlang der gemeinsamen Rotationsachse verfahrbar, wodurch ein Abstand zwischen den Spindeln variiert werden kann.

Die Stangenlademagazine sind dabei Geräte, mittels welcher Halbzeuge in Form von Stangenmaterial in verschiedenen Formen (z. B. Rund-, Vierkant- oder Sechskantmaterial) der Drehmaschine, insbesondere der CNC-Drehmaschine, bzw. deren Spindeln über ihre Öffnungen manuell oder bevorzugt vollautomatisch zugeführt werden können. Unter "zugeordnet" kann in diesem Zusammenhang insbesondere verstanden werden, dass sich das erste Stangenlademagazin auf der Seite der ersten Spindel befindet, wobei eine Ausschuböffnung des ersten Stangenlademagazins mit der Öffnung der ersten Spindel verbunden ist, und sich das zweite Stangenlademagazin auf der Seite der zweiten Spindel befindet, wobei eine Ausschuböffnung des zweiten Stangenlademagazins mit der Öffnung der zweiten Spindel verbunden ist. Die Bearbeitungswerkzeuge sind auf Werkzeugrevolvern der Drehmaschine angeordnet, welche z. B. innerhalb des Bearbeitungsraums verdreht und verschoben werden können.

Die zwei Spindeln können insbesondere gleiche Funktionalitäten, Maße und/oder gleiche Leistungen aufweisen. Die erfindungsgemäße Drehmaschine umfasst somit anstelle einer "verkümmerten" Gegenspindel (mit geringerer Leistung und verminderter Funktionalität gegenüber der Hauptspindel) eine vollwertige zweite ("Haupt-")Spindel, auf deren Seite sich ein zweites Stangenlademagazin befindet. Mit anderen Worten wird aus einer aus dem Stand der Technik bekannten Nebenspindel eine vollwertige Hauptspindel und durch das Bereitstellen des zweiten Stangenlademagazins kann die Drehmaschine wirtschaftlicher und flexibler eingesetzt werden.

So kann die erfindungsgemäße Drehmaschine insbesondere für die gleichzeitige bzw. simultane Herstellung zweier einfacher Drehteile eingesetzt werden, wobei jeweils eines der einfachen Drehteile auf einer der Spindeln eingespannt sein, von dieser in Rotation versetzt werden und mittels eines Bearbeitungswerkzeugs innerhalb des Bearbeitungsraums drehend bearbeitet werden kann. Somit wird ermöglicht, dass die einfachen Drehteile zeitgleich gefertigt werden können, wodurch eine Anzahl pro Zeiteinheit gefertigter Werkstücke erhöht, insbesondere verdoppelt, und die Drehmaschine besonders effizient eingesetzt werden kann. Bei den zwei einfachen Drehteilen kann es sich um gleiche oder unterschiedliche Drehteile handeln. Die erfindungsgemäße Drehmaschine ermöglicht folglich einen besseren Nutzungsgrad, z. B. in der Messgröße "Werkstücke pro Stellfläche" oder "Werkstücke pro Maschine".

Die erfindungsgemäße Drehmaschine eignet sich auch für die gleichzeitige Herstellung komplexer Drehteile, wobei ein erstes komplexes Drehteil nacheinander auf beiden Spindeln und/oder rotierbaren Abgreifeinrichtungen eingespannt sein, von diesen in Rotation versetzt werden und mittels Bearbeitungswerkzeugen innerhalb des Bearbeitungsraums drehend bearbeitet werden kann. Ebenso kann zeitgleich ein zweites komplexes Drehteil nacheinander auf der jeweils anderen der Spindeln und/oder verfügbaren rotierbaren Abgreifeinrichtungen eingespannt sein, von diesen in Rotation versetzt werden und mittels Bearbeitungswerkzeugen innerhalb des Bearbeitungsraums drehend bearbeitet werden. Auch in diesem Anwendungsbeispiel wird ermöglicht, dass die komplexen Drehteile zeitgleich gefertigt werden können, wodurch die Anzahl pro Zeiteinheit gefertigter Werkstücke erhöht und die Drehmaschine besonders effizient eingesetzt werden kann. Bei den zwei komplexen Drehteilen kann es sich um gleiche oder unterschiedliche Drehteile handeln.

Gemäß einer Ausführungsform sind die erste Spindel und die zweite Spindel Gleichteile und symmetrisch zueinander angeordnet, wodurch der Aufbau der Drehmaschine vereinfacht werden kann.

Weiterhin kann die Drehmaschine wenigstens einen Roboter aufweisen, welcher dazu eingerichtet ist, zumindest Teile des ersten Halbzeugs aus dem Bereich der ersten Spindel in die zweite Spindel zu verschieben oder zu überführen und/oder zumindest Teile des zweiten Halbzeugs aus dem Bereich der zweiten Spindel in die erste Spindel zu verschieben oder zu überführen. Insbesondere kann der Roboter die Halbzeuge aus den jeweiligen Bereichen ihrer Spindeln entnehmen, nachdem zuvor jeweils ein Anfangsbereich der Halbzeuge bearbeitet und mittels eines Abstechmeißels abgestochen worden ist. Das Entnehmen kann ebenfalls durch ein Abgreifsystem im Werkzeugrevolver geschehen, was in vielen Fällen schneller erfolgen kann, als durch einen Roboter. In diesem Fall erfolgt ebenfalls ein Abtrennen des Anfangsbereichs des Halbzeugs durch einen Abstechmeißel eines freien weiteren Werkzeugrevolvers. Durch das Abstechen befindet sich der abgestochene, zuvor bearbeitete Teil des Halbzeugs nicht länger in der ersten Spindel, sondern in dessen näherer Umgebung und daher "im Bereich" der jeweiligen Spindel. Nichtsdestotrotz kann der Roboter auch dazu eingerichtet sein, die Halbzeuge unmittelbar aus der ersten Spindel in die zweite Spindel zu verschieben und umgekehrt. Der Roboter kann dazu eingerichtet sein, dreidimensional innerhalb des Bearbeitungsraums verdreht und verschoben werden, wobei diese Bewegungen insbesondere vollautomatisch ausgeführt werden können.

Der Roboter kann insbesondere das erste Halbzeug in die zweite Spindel und das zweite Halbzeug derart in die erste Spindel befördern, dass jeweils ein zuvor noch nicht bearbeiteter Endbereich der Halbzeuge in den Bearbeitungsraum hineinragt und für eine drehende Bearbeitung zur Verfügung steht. Durch den Einsatz des Roboters kann somit jeweils ein Anfangsbereich und ein dem Anfangsbereich abgewandter Endbereich der Werkstücke abwechselnd innerhalb der zwei Spindeln angeordnet und bearbeitet werden. Insbesondere können zwei Roboter vorgesehen sein, wobei ein erster Roboter dazu eingerichtet ist, das erste Halbzeug aus dem Bereich der ersten Spindel in die zweite Spindel zu verschieben, und ein zweiter Roboter dazu eingerichtet ist, das zweite Halbzeug aus dem Bereich der zweiten Spindel in die erste Spindel zu verschieben. Durch den Einsatz der zwei Roboter kann eine gleichzeitige oder zumindest sich zeitlich überlappende Bearbeitung der beiden voneinander abgewandten Seiten der Halbzeuge bzw. Werkstücke ermöglicht werden. Dadurch kann mit einem Roboter und wenigstens einer wie vorstehend beschriebenen verfahrbaren Spindel ein besonders effizienter Austausch von Werkstücken aus der ersten Spindel in die zweite Spindel und umgekehrt erfolgen. Weiterhin kann die erste und/oder die zweite Spindel dazu eingerichtet sein, in einer horizontalen und in einer vertikalen Richtung verfahren zu werden, so dass sich die erste und/oder die zweite Spindel in Richtung der jeweils anderen Spindel bewegen und aus dieser Spindel ein zuvor bearbeitetes Halbzeug auch ohne Hilfe durch einen Roboter entnehmen kann.

Gemäß der Erfindung ist wenigstens ein Werkzeugrevolver zur Aufnahme von wenigstens einem Werkzeug zur Bearbeitung des ersten zu bearbeitenden Halbzeugs und/oder des zweiten zu bearbeitenden Halbzeugs oder teilgefertigten Werkstücken innerhalb des Bearbeitungsraums angeordnet, wobei der wenigstens eine Werkzeugrevolver eine dritte in Rotation versetzbare Spindel (im Sinne der oben genannten Abgreifeinrichtung) zur Aufnahme und zur Rotation des ersten zu bearbeitenden Halbzeugs oder des zweiten zu bearbeitenden Halbzeugs aufweist. Durch die Dritte Spindel kann die Bearbeitung eines zusätzlichen Halbzeugs oder die weitere Bearbeitung der bisherigen Halbzeuge ermöglicht werden.

Gemäß der Erfindung sind vier Werkzeugrevolver innerhalb des Bearbeitungsraums angeordnet, wobei zwei Werkzeugrevolver jeweils eine in Rotation versetzbare Spindel (Abgreifeinrichtungen) aufweisen, welche zur zeitgleichen Aufnahme und Rotation jeweils eines der zu bearbeitenden Halbzeuge eingerichtet sind, wobei die übrigen zwei Werkzeugrevolver dazu eingerichtet sind, die gleichzeitig rotierenden Halbzeuge gleichzeitig zu bearbeiten. Mit anderen Worten weisen zwei Werkzeugrevolver eine Spindel auf und zwei Werkzeugrevolver müssen keine Spindel aufweisen. Werkzeugrevolver mit rotierbarer Abgreifeinrichtung entsprechen somit einer oben genannten dritten Spindel. Diese Ausführungsform ermöglicht, dass die Halbzeuge aus ihren Spindeln entnommen werden können, nachdem zuvor jeweils ein Anfangsbereich der Halbzeuge bearbeitet worden ist. Anschließend können die Halbzeuge in jeweils eine der Spindeln der Werkzeugrevolver eingeführt, dort eingespannt und in Rotation versetzt werden, um nach einem erfolgten Abstechen einen jeweils noch nicht bearbeiteten Endbereich der Halbzeuge mit einem Werkzeug zu bearbeiten, welches an einem Werkzeugrevolver ohne Spindel angeordnet ist. Während einer solchen Bearbeitung des ersten und des zweiten Halbzeugs können durch die beiden Stangenlademagazine bereits weitere Halbzeuge in die erste und die zweite Spindel gefördert werden, wodurch die Produktionseffizienz weiter gesteigert werden kann.

In diesem Zusammenhang kann ein vorhandener Roboter - ggfs. mit wenigstens einer wie vorstehend beschriebenen in horizontaler und vertikaler Richtung verfahrbaren Spindel - dazu eingerichtet sein, das erste Halbzeug aus dem Bereich der ersten Spindel in eine der Spindeln der Werkzeugrevolver zu verschieben und das zweite Halbzeug aus dem Bereich der zweiten Spindel in die andere der Spindeln der Werkzeugrevolver zu verschieben. Das genannte Verschieben mittels des Roboters bzw. mittels der Roboter kann wie weiter oben beschrieben insbesondere nach einem Abstechen der zuvor bearbeiteten Anfangsbereiche der Halbzeuge erfolgen.

Alternativ kann das erste Stangenlademagazin dazu eingerichtet sein, das erste Halbzeug aus der ersten Spindel in eine der Spindeln der Werkzeugrevolver zu übergeben, wobei das zweite Stangenlademagazin dazu eingerichtet ist, das zweite Halbzeug aus der zweiten Spindel in die andere der Spindeln der Werkzeugrevolver zu übergeben. Diese Übergabe erfolgt dann ohne Hilfe eines Roboters, in der Regel wird dann das Halbzeug von der Abgreifeinrichtung eines Werkzeugrevolvers aufgenommen.

In diesem Zusammenhang kann es besonders vorteilhaft sein, wenn sich eine Einspannvorrichtung bzw. eine Einführöffnung für Halbzeuge der Einspannvorrichtung der jeweiligen Spindel der Werkzeugrevolver jeweils in einer Vorschubrichtung des Stangenlademagazins befindet, was insbesondere durch ein Verdrehen und/oder Verschieben der zwei Werkzeugrevolver mit den Spindeln ermöglicht werden kann. Ein Abstechen der zuvor bearbeiteten Anfangsbereiche der Halbzeuge kann gemäß dieser Ausführungsform insbesondere nach dem Verschieben der Halbzeuge mittels der Stangenlademagazine in die Spindeln bzw. Abgreifeinrichtungen der Werkzeugrevolver erfolgen, wenn die Halbzeuge in den Spindeln der Werkzeugrevolver eingespannt und in Rotation versetzt worden sind. Ein Verschieben der Halbzeuge per Hand oder per Roboter kann gemäß dieser Ausführungsform entfallen, wodurch der Produktionsprozess der Werkstücke weiter automatisiert und vereinfacht sowie Herstellungskosten der Drehmaschine durch Verzicht auf kostenintensive Robotik gesenkt werden können.

Die vorstehend beschriebene Drehmaschine gemäß dem ersten Aspekt der Erfindung ermöglicht insbesondere durch die zweite ("Haupt-")Spindel und das zweite Stangenlademagazin, besonders bevorzugt in Abstimmung mit einer intelligenten Steuerungseinheit einer CNC-Drehmaschine, eine neue Arbeitsweise von Werkzeugen bei der Herstellung von Präzisionsteilen, wodurch die Wirtschaftlichkeit deutlich gesteigert werden kann. Somit kann die Produktionseffizienz deutlich gesteigert werden, was sich insbesondere positiv auf fixe und variable Herstellkostenanteile eines Produkts niederschlagen kann.

Gemäß einem zweiten Aspekt der Erfindung wird daher ein Verfahren gemäß dem unabhängigen Anspruch 5 zur Herstellung eines teilbearbeiteten ersten Werkstücks und eines teilbearbeiteten zweiten Werkstücks durch Drehen eines ersten Halbzeugs und Drehen eines zweiten Halbzeugs in einer Drehmaschine bereitgestellt. Das Verfahren beginnt mit einem Bereitstellen einer vorstehend im Zusammenhang mit dem ersten Aspekt der Erfindung beschriebenen Drehmaschine, bevorzugt einer CNC-Drehmaschine.

Das Herstellen des ersten lediglich einseitig und daher teilbearbeiteten Werkstücks erfolgt mittels der Schritte Fördern des ersten Halbzeugs durch die erste Öffnung der ersten Spindel der Drehmaschine in den zwischen den Spindeln befindlichen Bearbeitungsraum, Einspannen des ersten Halbzeugs in der ersten Spindel, Versetzen des ersten Halbzeugs in Rotation mittels der ersten Spindel sowie Drehen eines Anfangsbereichs des ersten Halbzeugs mittels eines ersten Bearbeitungswerkzeugs der Drehmaschine innerhalb des Bearbeitungsraums. Das Herstellen des zweiten ebenfalls lediglich einseitig und daher teilbearbeiteten Werkstücks erfolgt mittels der Schritte Fördern des zweiten Halbzeugs durch die zweite Öffnung der zweiten Spindel der Drehmaschine in den Bearbeitungsraum, Einspannen des zweiten Halbzeugs in der zweiten Spindel, Versetzen des zweiten Halbzeugs in Rotation mittels der zweiten Spindel sowie Drehen eines Anfangsbereichs des zweiten Halbzeugs mittels eines zweiten Bearbeitungswerkzeugs der Drehmaschine innerhalb des Bearbeitungsraums, wobei das Herstellen des ersten teilbearbeiteten Werkstücks und des zweiten teilbearbeiteten Werkstücks gleichzeitig erfolgt.

Aus dem zugeführten ersten und zweiten Halbzeug entsteht durch das vorstehend beschriebene Drehen das erste bzw. zweite teilbearbeitete Werkstück. Mittels des Verfahrens nach dem zweiten Aspekt der Erfindung können sowohl zwei gleiche Werkstücke als auch zwei unterschiedliche teilbearbeitete Werkstücke gleichzeitig bzw. simultan hergestellt werden.

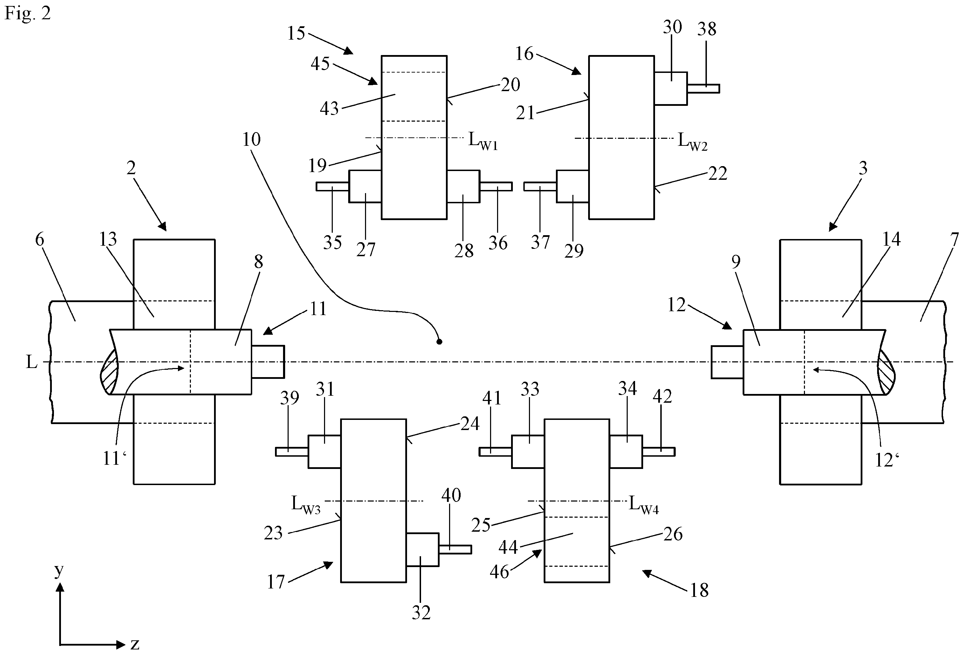

Gemäß dem Verfahren nach dem zweiten Aspekt der Erfindung wird eine vorstehend beschriebene Drehmaschine mit vier Werkzeugrevolvern bereitgestellt. Eine mögliche Umsetzung dieser Ausführungsform des Verfahrens wird im Zusammenhang mit Fig. 2 näher erläutert.

Gemäß dem Verfahren umfasst ein Herstellen eines endbearbeiteten ersten Werkstücks aus dem vorstehend beschriebenen teilbearbeiteten ersten Werkstück weiterhin folgende Schritte: Die Einspannung des ersten Halbzeugs in der ersten Spindel wird nach dem Drehen des ersten Halbzeugs gelöst, der zuvor bearbeitete Anfangsbereich des ersten Halbzeugs wird in einer der Spindeln des Werkzeugrevolvers eingespannt, und es folgt ein Abtrennen des teilbearbeiteten ersten Werkstücks von dem ersten Halbzeug. Das teilbearbeitete erste Werkstück wird anschließend mittels der Spindel, in welcher es nunmehr eingespannt ist, in Rotation versetzt, und der noch nicht bearbeitete Anfangsbereich des teilbearbeiteten ersten Werkstücks wird mittels eines der Bearbeitungswerkzeuge des Werkzeugrevolvers innerhalb des Bearbeitungsraums gedreht.

Mit anderen Worten wird das zuvor teilbearbeitete erste Werkstück von der ersten Spindel in die Spindel (Abgreifeinrichtung) eines der Werkzeugrevolver übergeben. Dies kann dadurch erfolgen, indem die Abgreifeinrichtung zunächst in eine Abgreifposition bewegt wird, in welcher der zuvor bearbeitete Anfangsbereich des ersten Halbzeugs in der Abgreifeinrichtung eingespannt werden könnte, was in diesem Fall jedoch vorerst noch nicht erfolgt. Stattdessen wird zunächst die Drehzahl der Abgreifeinrichtung mit der Drehzahl der ersten Spindel synchronisiert, welche immer noch rotiert. Erst nach diesem Synchronisieren greift die Abgreifeinrichtung den zuvor bearbeiteten Anfangsbereich des ersten Halbzeugs. Dadurch ist das erste Halbzeug mit dem teilbearbeiteten ersten Werkstück sowohl in der ersten Spindel als auch in der Abgreifeinrichtung eingespannt, welche mit der gleichen Drehzahl rotieren. Nun kann das teilbearbeitete erste Werkstück von dem ersten Halbzeug getrennt werden und die Einspannung in der ersten Spindel gelöst werden. Das von dem ersten Halbzeug getrennte teilbearbeitete erste Werkstück ist somit nur noch in der Abgreifeinrichtung eingespannt. Da die Abgreifeinrichtung bereits rotiert, ist auch das teilbearbeitete erste Werkstück bereits in Rotation versetzt und kann mittels eines Werkzeugs der Werkzeugrevolver gedreht werden. Ein Herstellen eines endbearbeiteten zweiten Werkstücks aus dem vorstehend beschriebenen teilbearbeiteten zweiten Werkstück umfasst nach dem Verfahren gemäß dem zweiten Aspekt der Erfindung weiterhin folgende Schritte: Die Einspannung des zweiten Halbzeugs in der zweiten Spindel wird nach dem Drehen des zweiten Halbzeugs gelöst, der zuvor bearbeitete Anfangsbereich des zweiten Halbzeugs wird in der anderen Spindel der Werkzeugrevolver eingespannt, und es folgt ein Abtrennen des teilbearbeiteten zweiten Werkstücks von dem zweiten Halbzeug. Das teilbearbeitete zweite Werkstück wird anschließend mittels der Spindel, in welcher es nunmehr eingespannt ist, in Rotation versetzt, und der noch nicht bearbeitete Anfangsbereich des teilbearbeiteten zweiten Werkstücks wird mittels eines weiteren der Bearbeitungswerkzeuge des Werkzeugrevolvers innerhalb des Bearbeitungsraums gedreht. Die Übergabe des zuvor teilbearbeiteten zweiten Werkstücks von der zweiten Spindel in die andere Spindel (Abgreifeinrichtung) der Werkzeugrevolver kann analog wie im Zusammenhang mit dem teilbearbeiteten ersten Werkstück erfolgen.

Das Lösen der Einspannung der Halbzeuge kann insbesondere ein Abstechen mittels eines Abstechmeißels beinhalten. Ein Transportieren der einseitig bearbeiteten Halbzeuge zu der jeweiligen Spindel kann z. B. per Hand oder mittels eines Roboters erfolgen, wie dies im Zusammenhang mit dem ersten Aspekt der Erfindung beschrieben ist.

Dieses Verfahren sieht somit vor, dass die Halbzeuge nach Bearbeitung ihres ersten Anfangsbereichs zur Bearbeitung ihres zweiten Anfangsbereichs nicht in die jeweils gegenüberliegende Spindel verschoben werden, sondern jeweils in eine der Spindeln der Werkzeugrevolver (Abgreifeinrichtungen). Gemäß dieser Ausführungsform wird daher eine Drehmaschine bereitgestellt, bei der vier Werkzeugrevolver innerhalb des Bearbeitungsraums angeordnet sind, wobei zwei Werkzeugrevolver jeweils eine in Rotation versetzbare Spindel aufweisen, welche zur zeitgleichen Aufnahme und Rotation jeweils eines der zu bearbeitenden Halbzeuge eingerichtet sind, wobei die übrigen zwei Werkzeugrevolver dazu eingerichtet sind, die gleichzeitig rotierenden Halbzeuge gleichzeitig zu bearbeiten. Ein Roboter kann ferner dazu eingerichtet sein, das erste Halbzeug aus dem Bereich der ersten Spindel in eine der Spindeln der Werkzeugrevolver zu verschieben und das zweite Halbzeug aus dem Bereich der zweiten Spindel in die andere der Spindeln der Werkzeugrevolver zu verschieben. Außerdem kann das erste Stangenlademagazin dazu eingerichtet sein, das erste Halbzeug aus der ersten Spindel in eine der Spindeln der Werkzeugrevolver zu verschieben, wobei das zweite Stangenlademagazin dazu eingerichtet ist, das zweite Halbzeug aus der zweiten Spindel in die andere der Spindeln der Werkzeugrevolver zu verschieben.

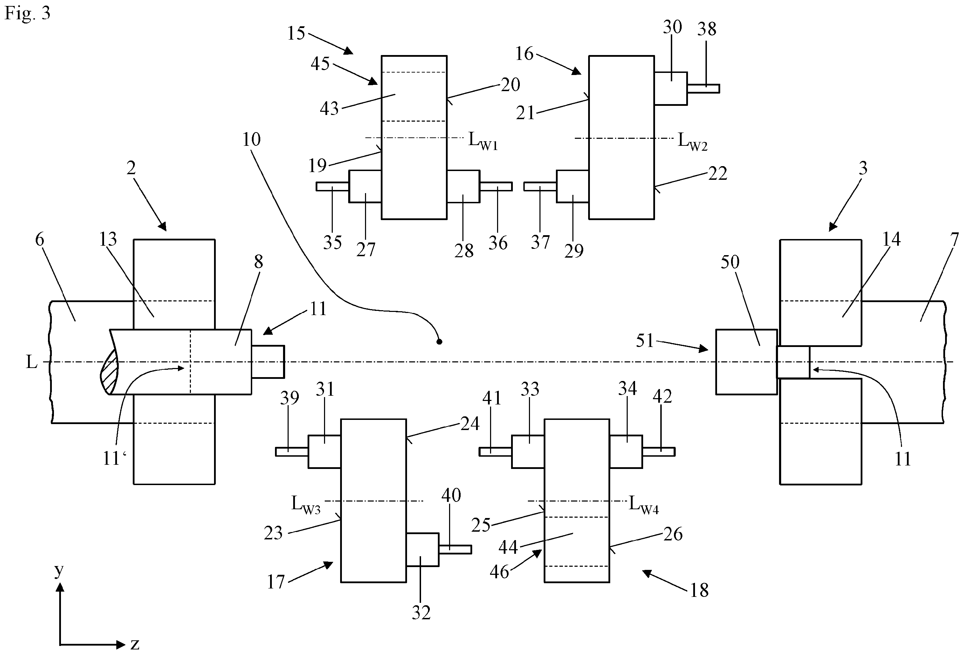

Gemäß einem dritten Aspekt der Erfindung wird ein Verfahren gemäß dem unabhängigen Anspruch 6 zur Herstellung eines Werkstücks durch Drehen eines Halbzeugs in einer Drehmaschine bereitgestellt. Ein Ausführungsbeispiel des Verfahrens wird im Zusammenhang mit Fig. 3 näher erläutert.

Das Verfahren umfasst die folgenden Verfahrensschritte: Es wird eine Drehmaschine gemäß dem ersten Aspekt der Erfindung bereitgestellt. Zunächst wird ein teilbearbeitetes Werkstück durch Bearbeiten eines Anfangsbereichs einer ersten Stirnseite des Halbzeugs hergestellt, wobei die folgenden Schritte ausgeführt werden: Das Halbzeug wird durch die erste Öffnung der ersten Spindel der Drehmaschine in den zwischen den Spindeln befindlichen Bearbeitungsraum gefördert und in der ersten Spindel eingespannt. Das Halbzeug wird mittels der ersten Spindel in Rotation versetzt und der Anfangsbereich des Halbzeugs wird mittels eines ersten Bearbeitungswerkzeugs der Drehmaschine innerhalb des Bearbeitungsraums gedreht. Somit ist aus dem Halbzeug ein teilbearbeitetes Werkstück entstanden.

Es folgt ein Herstellen eines endbearbeiteten Werkstücks aus dem teilbearbeiteten Werkstück mit einem Greifen des gedrehten Anfangsbereichs des Halbzeugs mittels der zweiten Spindel. Das teilbearbeitete Werkstück wird von dem Halbzeug abgetrennt, und es erfolgt ein Bearbeiten eines dem Anfangsbereich abgewandten Endbereichs des teilbearbeiteten Werkstücks mittels der folgenden Schritte: Das teilbearbeitete Werkstück wird in der zweiten Spindel eingespannt und das teilbearbeitete Werkstücks wird mittels der zweiten Spindel in Rotation versetzt. Weiterhin erfolgt ein Drehen des Endbereichs des teilbearbeiteten Werkstücks mittels eines zweiten Bearbeitungswerkzeugs der Drehmaschine innerhalb des Bearbeitungsraums, wodurch das teilbearbeitete Werkstück zum endbearbeiteten Werkstück wird. Anschließend wird das endbearbeitete Werkstück aus der zweiten Spindel ausgestoßen.

Mit anderen Worten wird das zuvor teilbearbeitete Werkstück von der ersten Spindel in die zweite Spindel übergeben. Dies kann dadurch erfolgen, indem die zweite Spindel zunächst in eine Abgreifposition bewegt wird, in welcher der zuvor bearbeitete Anfangsbereich des Halbzeugs in der zweiten Spindel eingespannt werden könnte, was in diesem Fall jedoch vorerst noch nicht erfolgt. Stattdessen wird zunächst die Drehzahl der zweiten Spindel mit der Drehzahl der ersten Spindel synchronisiert, welche immer noch rotiert. Erst nach diesem Synchronisieren greift die zweite Spindel den zuvor bearbeiteten Anfangsbereich des Halbzeugs. Dadurch ist das Halbzeug mit dem teilbearbeiteten Werkstück sowohl in der ersten Spindel als auch in der zweiten Spindel eingespannt, welche mit der gleichen Drehzahl rotieren. Nun kann das teilbearbeitete Werkstück von dem Halbzeug getrennt werden und die Einspannung in der ersten Spindel gelöst werden. Das von dem Halbzeug getrennte teilbearbeitete Werkstück ist somit nur noch in der zweiten Spindel eingespannt. Da die zweite Spindel bereits rotiert, ist auch das teilbearbeitete Werkstück bereits in Rotation versetzt und kann mittels eines Werkzeugs der Werkzeugrevolver gedreht werden.

Eine Ausführungsform des Verfahrens gemäß dem dritten Aspekt der Erfindung umfasst ferner die folgenden Schritte: Bisher noch unbearbeitetes Halbzeug wird in den Bearbeitungsraum nachgerückt, nachdem das Abtrennen des teilbearbeiteten Werkstücks von dem Halbzeug erfolgt ist und während der Endbereich des teilbearbeiteten Werkstücks bearbeitet wird. Es folgt ein erneutes Durchlaufen der Verfahrensschritte gemäß dem Verfahren nach dem dritten Aspekt der Erfindung ab dem Verfahrensschritt, in welchem das teilbearbeite Werkstück durch Bearbeiten eines Anfangsbereichs einer ersten Stirnseite des nachgerückten Halbzeugs hergestellt wird.

### Kurze Beschreibung der Figuren

Im Folgenden werden Ausführungsbeispiele der Erfindung anhand der schematischen Zeichnung näher erläutert. Hierbei zeigt:
- Fig. 1: eine Vorderansicht eines Ausführungsbeispiels einer erfindungsgemäßen CNC-Drehmaschine,
- Fig. 2: eine Vorderansicht auf Spindeln und Werkzeugrevolver für die CNC-Drehmaschine nach Fig. 1 zum Betrieb in einem Betriebsmodus, in welchem zwei Halbzeuge gleichzeitig gedreht werden, und
- Fig. 3: eine Vorderansicht auf Spindeln und Werkzeugrevolver für die CNC-Drehmaschine nach Fig. 1 zum Betrieb in einem weiteren Betriebsmodus, in welchem ein Werkstück zunächst einseitig in einer der Spindeln teilgefertigt und nach Übergabe auf die andere Spindel endbearbeitet wird.

### Detaillierte Beschreibung von Ausführungsbeispielen

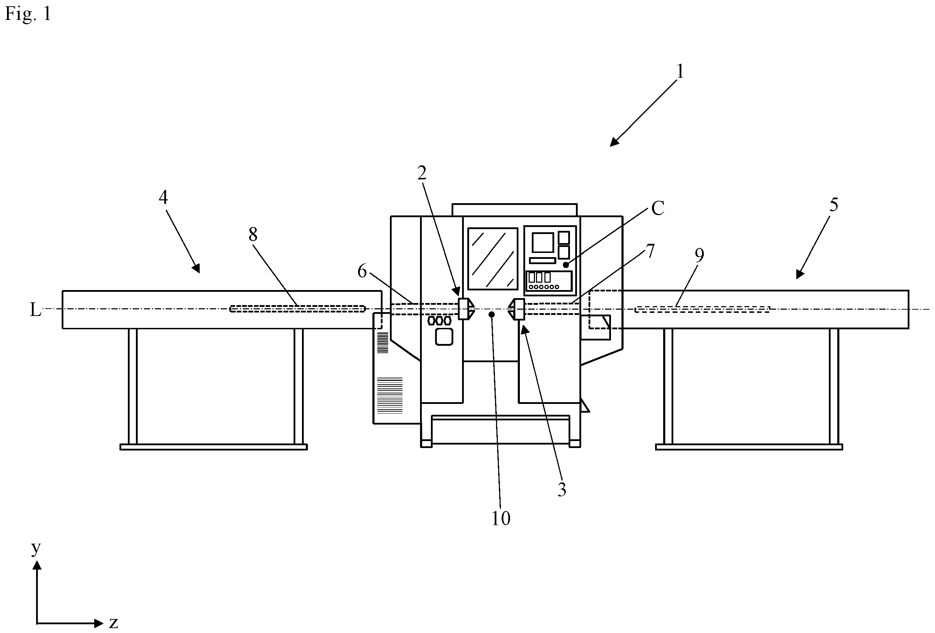

Fig. 1 zeigt eine CNC-Drehmaschine 1 mit einer in Fig.1 links dargestellten ersten Spindel 2 und einer in Fig. 1 rechts dargestellten zweiten Spindel 3. Der ersten Spindel 2 ist ein erstes Stangenlademagazin 4 zugeordnet und der zweiten Spindel 3 ist ein zweites Stangenlademagazin 5 zugeordnet. Die im Folgenden beschriebenen Funktionen bzw. Arbeitsabläufe der CNC-Drehmaschine können - sofern nichts anderes angegeben ist - vorprogrammiert sein und vollautomatisiert ausgeführt werden, wozu die CNC-Drehmaschine 1 insbesondere eine Steuerungs- und Bedieneinheit C aufweist. Ferner kann die CNC-Drehmaschine 1 nicht gezeigte Mittel zur Abfuhr von Spänen umfassen, wobei die Späneabfuhr bevorzugt nach hinten oder nach vorne erfolgt.

Die erste Spindel 2 und die zweite Spindel 3 liegen bevorzugt auf einer gemeinsamen gedachten Längsachse L und können von Antriebseinheiten (nicht gezeigt) in Rotation versetzt werden, so dass in ihnen eingespannte Halbzeuge 8 und 9 (angedeutet durch jeweils eine gestrichelte Linie in Fig. 1) ebenfalls rotieren und mittels Bearbeitungswerkzeugen (Fig. 2) bearbeitet werden können. Weiterhin weisen die Spindeln 2 und 3 jeweils eine Öffnung 6 und 7 auf (ebenfalls angedeutet durch jeweils eine gestrichelte Linie in Fig. 1), worüber die in dem ersten Stangenlademagazin 4 und dem zweiten Stangenlademagazin 5 befindlichen Halbzeuge 8 und 9 in einen Bearbeitungsraum 10 der CNC-Drehmaschine 1 gefördert werden können, wobei sich der Bearbeitungsraum 10 zwischen der ersten Spindel 2 und der zweiten Spindel 3 befindet.

Wie aus Fig. 2 ersichtlich, befindet sich jeweils ein Anfangsbereich 11 bzw. 12 der stangenförmigen Halbzeuge 8 und 9 innerhalb des Bearbeitungsraums 10. Die Halbzeuge 8 und 9 wurden zuvor über die Öffnungen 6 und 7 in die Halbzeuge 8 und 9 umgebende Spannvorrichtungen 13 und 14 (z.B. Spannzangen oder ein Dreibackenfutter) der Spindeln 2 bzw. 3 eingebracht und in der durch Fig. 2 gezeigten Position mittels der Spannvorrichtungen 13 und 14 fixiert. Weiterhin können sich innerhalb des Bearbeitungsraums 10 mehrere Werkzeugrevolver befinden. In dem gezeigten Beispiel sind ein in Fig. 2 oben links dargestellter erster Werkzeugrevolver 15, ein in Fig. 2 oben rechts dargestellter zweiter Werkzeugrevolver 16, ein in Fig. 2 unten links dargestellter dritter Werkzeugrevolver 17 und ein in Fig. 2 unten rechts dargestellter vierter Werkzeugrevolver 18 vorgesehen.

Die Werkzeugrevolver 15 bis 18 können jeweils um ihre gedachte Längsachse L_{W1}, L_{W2}, L_{W3} bzw. L_{W4} verdreht und entlang ihrer jeweiligen Längsachse L_{W1}, L_{W2}, L_{W3} bzw. L_{W4} sowie quer dazu verschoben werden. Aus einander abgewandten Stirnseiten 19 bis 26 der Werkzeugrevolver 15 bis 18 ragt jeweils ein Werkzeughalter 27 bis 34 heraus, welcher jeweils ein Bearbeitungswerkzeug 35 bis 42 aufnimmt. Durch Verdrehen und/oder Verschieben der Werkzeugrevolver 15 bis 18 können die Bearbeitungswerkzeuge 35 bis 42 in Positionen bzw. Stellungen gebracht werden, in welchen sie sich in zerspanendem Eingriff mit den Halbzeugen 8 und 9 befinden, um aus den Halbzeugen 8 und 9 durch Rotation der Halbzeuge ein Werkstück herzustellen. Bei der durch Fig. 2 gezeigten Konfiguration handelt es sich bei den Spindeln 2 und 3 um Gleichteile, welche einander auf der Längsachse L gegenüberliegend symmetrisch zueinander, d. h. punktsymmetrisch zueinander, angeordnet sind. Bei den hergestellten Werkstücken kann es sich um Gleichteile oder um unterschiedliche Werkstücke handeln.

Wie durch Fig. 2 gezeigt, können zunächst ein rechter Anfangsbereich 11 des links dargestellten ersten Halbzeugs 8 und ein linker Anfangsbereich 12 des rechts dargestellten zweiten Halbzeugs gedreht werden. Dazu wird das erste Halbzeug 8 in der ersten Spannvorrichtung 13 der ersten Spindel 2 eingespannt und die erste Einspannvorrichtung 13 in Rotation versetzt, wodurch das erste Halbzeug 8 ebenfalls rotiert und der rechte Anfangsbereich 11 des ersten Halbzeugs 8 mittels eines der in Position gebrachten Bearbeitungswerkzeuge 35 oder 39 drehend bearbeitet wird. Auf ähnliche Weise wird das zweite Halbzeug 9 in der zweiten Spannvorrichtung 14 der zweiten Spindel 3 eingespannt und die zweite Einspannvorrichtung 14 in Rotation versetzt, wodurch das zweite Halbzeug 9 ebenfalls rotiert und der linke Anfangsbereich 12 des zweiten Halbzeugs 9 mittels eines der in Position gebrachten Bearbeitungswerkzeuge 38 oder 42 drehend bearbeitet wird.

Sofern die Spindeln 2 und 3 in einer Höhenrichtung y quer zur Längsachse L beweglich ausgelegt sind, wird außerdem die Bearbeitung des Anfangsbereichs 11 des Halbzeugs 8 durch die Bearbeitungswerkzeuge 37 und/oder 41 möglich, die an dem zweiten Werkzeugrevolver 16 bzw. an dem vierten Werkzeugrevolver 18 angeordnet sind. Ebenso ist in diesem Fall die Bearbeitung des Anfangsbereiches 12 des Halbzeugs 9 durch die Bearbeitungswerkzeuge 36 und/oder 40 möglich, die an dem ersten Werkzeugrevolver 15 bzw. an dem dritten Werkzeugrevolver 17 angeordnet sind. Nach dem Bearbeiten der Halbzeuge 8, 9 können die bearbeiteten Werkstücke vom Halbzeug 8 bzw. 9 getrennt werden und aus der Drehmaschine 1 ausgeschleust werden. In diesem Bearbeitungsmodus können identische oder auch unterschiedliche Teile parallel hergestellt werden.

Zur Ausführung eines weiteren Betriebsmodus' enthalten der erste Werkzeugrevolver 15 und der vierte Werkzeugrevolver 18 zusätzlich jeweils eine weitere Spannvorrichtung 43 bzw. 44, in welchen die teilgefertigten Werkstücke aus der Bearbeitung der Halbzeuge 8 und 9 eingeführt und eingespannt werden können. Eine in Fig. 2 oben links dargestellte erste weitere Spannvorrichtung 43 des ersten Werkzeugrevolvers 15 bildet einen Bestandteil einer ersten weiteren in Rotation versetzbaren Spindel (Abgreifeinrichtung) 45 und eine in Fig. 2 unten rechts dargestellte zweite weitere Spannvorrichtung 44 des vierten Werkzeugrevolvers 18 bildet einen Bestandteil einer zweiten weiteren in Rotation versetzbaren Spindel (Abgreifeinrichtung) 46. Die weiteren Spannvorrichtungen 43 bzw. 44 können mittels nicht dargestellter Antriebsvorrichtungen in Rotation versetzt werden, so dass in den weiteren Spannvorrichtungen 43 und/oder 44 eingespannte teilbearbeitete Werkstücke ebenfalls rotieren und mittels Bearbeitungswerkzeugen der freien Werkzeugrevolver 16 und 17 bearbeitet werden können. Aufgrund der geringeren Leistung der zusätzlichen Spindeln (Abgreifeinrichtungen) 45 und 46 in den Werkzeugrevolvern 15 und 18 können nur eingeschränkte, einfache Zerspanungsoperationen durchgeführt werden. Bevorzugt wird hierbei nur die Abstichseite des Werkstücks bearbeitet, um Abstichspuren zu beseitigen.

Z. B. kann der rechte Anfangsbereich 11 des in Fig. 2 links dargestellten ersten Halbzeugs 8 zunächst mittels des Bearbeitungswerkzeugs 35 des ersten Werkzeugrevolvers 15 bearbeitet werden. Auf ähnliche Weise kann gleichzeitig zunächst der linke Anfangsbereich 12 des in Fig. 2 rechts dargestellten zweiten Halbzeugs 9 mittels des Bearbeitungswerkzeugs 42 des vierten Werkzeugrevolvers 18 bearbeitet werden. Nachdem die einander gegenüberliegenden Anfangsbereiche 11 und 12 der Halbzeuge 8 und 9 wie vorgesehen bearbeitet worden sind, werden die weiteren Spannvorrichtungen 43 und 44 in eine geöffnete Stellung gebracht, so dass der rechte Anfangsbereich 11 des ersten Halbzeugs 8 in die Spannvorrichtung 43 des ersten Werkzeugrevolvers 15 verschoben werden kann, und der linke Anfangsbereich 12 des zweiten Halbzeugs 9 in die Spannvorrichtung 44 des ersten Werkzeugrevolvers 18 verschoben werden kann.

Nach dem Einspannen der Anfangsbereiche 11 und 12 in die weiteren Spannvorrichtungen 43 bzw. 44, wobei an den Anfangsstücken der Halbzeuge 8 und 9 noch fest das teilgefertigte Werkstück anhängt, werden die teilgefertigten Werkstücke z.B. durch Abstichsysteme an den Werkzeugrevolvern 17 und 16 von den Halbzeugen 8 und 9 getrennt. Nun können die Werkzeugrevolver 15 bis 18 derart verfahren und/oder verschoben werden, dass die teilbearbeiteten Werkstücke in der jeweiligen Spannvorrichtung 44 bzw. 43 der Werkzeugrevolver 15 bzw. 18 durch Werkzeuge der Revolver 16 und 17 endbearbeitet werden können.

Insbesondere kann der erste Werkzeugrevolver 15 beispielsweise derart verdreht und/oder verschoben werden, dass die Längsachse L der Spindeln 2 und 3 bevorzugt mittig durch die geöffnete erste weitere Spannvorrichtung 43 des ersten Werkzeugrevolvers 15 verläuft. Ebenso kann der vierte Werkzeugrevolver 18, der sich in der durch Fig. 2 gezeigten Stellung befindet, durch Verdrehen und/oder Verschieben in eine Stellung gebracht werden, in welcher die Mitte der Spannvorrichtung 44 ebenfalls auf der Längsachse L liegen kann. Die Positionen der Werkzeugrevolver 15 bis 18 und der Werkzeuge 35 bis 42 werden dabei bevorzugt durch sensorische Überwachung oder durch Programmierung gesteuert, so dass eine gegenseitige Kollision der Werkzeugrevolver 15 bis 18, der Werkzeuge 35 bis 42, Halbzeuge 8 und 9, teilgefertigten Werkstücke etc. ausgeschlossen wird.

Alternativ können auch die Stangenlademagazine 4 und 5 genutzt werden, um die Halbzeuge 8 und 9 aus den jeweiligen Spannvorrichtungen 13 bzw. 14 der Spindeln 2 bzw. 3 heraus in der Längsrichtung L der Spindeln 2 und 3 in die zweite weitere Spannvorrichtung 44 (erstes Halbzeug 8) bzw. in die erste weitere Spannvorrichtung 43 (zweites Halbzeug 9) zu verschieben. Dazu können die Werkzeugrevolver 15 bis 18 wie vorstehend im Zusammenhang mit dem Verschieben der Halbzeuge 8 und 9 per Hand bzw. mittels eines Roboters beschrieben, verdreht und/oder verschoben werden. Sobald die Halbzeuge 8 und 9 innerhalb der weiteren Spannvorrichtungen 43 bzw. 44 eingespannt sind, können die Halbzeuge 8 und 9 durch Rotation der weiteren Spannvorrichtungen 43 und 44 ebenfalls in Rotation versetzt werden. Jetzt können die Anfangsbereiche 11 und 12 zunächst mittels nicht dargestellter Abstechmeißel von dem jeweiligen restlichen Halbzeug 8 bzw. 9 abgestochen werden und nach erfolgtem Abstechen die Rotation der weiteren Spannvorrichtungen 43 und 44 gestoppt werden, wobei die Abstechmeißel z. B. an den Werkzeugrevolvern 17 oder 16 angebracht sein können. Nach dem jeweiligen Abstechen können der erste Werkzeugrevolver 15 und der vierte Werkzeugrevolver 18 in eine Stellung gebracht werden, die eine Bearbeitung der Enden der abgestochenen Halbzeugabschnitte durch die verfügbaren Werkzeugrevolver 17 und 16 ermöglicht.

Fig. 3 zeigt einen weiteren Betriebsmodus. In diesem Betriebsmodus wird die erfindungsgemäße Drehmaschine 1 nach Fig. 1 mit den zwei Spindeln 2, 3 und vier Werkzeugrevolvern 15 bis 18 gemäß Fig. 2 mit nur einem einzigen Halbzeug 8 in der ersten Spannvorrichtung 13 beladen. Die gegenüberliegende zweite Spannvorrichtung 14 verbleibt zunächst leer. In diesem Betriebsmodus wird der Anfangsbereich 11 des Halbzeugs 8 teilweise durch die Werkzeuge 35, 39 und gegebenenfalls 37 und 41 bearbeitet. Nachdem der Anfangsbereich 11 auf diese Weise wie vorgesehen bearbeitet worden ist, kann zunächst die Rotation der ersten Spannvorrichtung 13 und damit auch des nunmehr einseitig endseitig bearbeiteten Halbzeugs 8 gestoppt werden.

Nachdem die zweite Spindel 3 entlang der Längsachse L nach links auf die erste Spindel 2 zu in eine Abgreifposition gefahren ist und in dieser Abgreifposition mittels der zweiten Spannvorrichtung 14 den Anfangsbereich 11 des teilbearbeiteten Halbzeugs 8 gegriffen hat, wird mittels des ersten Werkzeugrevolvers 15 oder des dritten Werkzeugrevolvers 17 das teilbearbeitete Werkstück 50 von dem Halbzeug 8 getrennt und somit komplett in die zweite Spannvorrichtung 14 der zweiten Spindel 3 übergeben. Die zweite Spindel 3 kann nun in ihre in Fig. 3 äußerst rechts dargestellte Endlage zurückfahren, in welcher ein Endbereich 51 des teilbearbeiteten Werkstücks 50 durch verfügbare Werkzeuge gedreht und somit das teilbearbeitete Werkstück 50 fertig bearbeitet wird. Parallel, d.h. zeitgleich oder zumindest sich zeitlich überlappend, wird die Einspannung des Halbzeugs 8 innerhalb der ersten Spannvorrichtungen 13 gelöst, um ein neues Anfangsstück 11 des Halbzeugs 8 in den Bearbeitungsraum 10 zu schieben.

Das erste Halbzeug 8 behält dabei seine Orientierung, d. h. es wird derart in die erste Spannvorrichtung 13 der ersten Spindel 2 eingespannt, dass der zuvor bearbeitete nun nicht mehr in der ersten Spindel sondern in der zweiten Spindel 3 existente rechte Anfangsbereich 11 durch einen neuen Anfangsbereich 11' des Halbzeugs 8 ersetzt wird und sich nun wieder innerhalb des Bearbeitungsraums 10 befindet und von den Bearbeitungswerkzeugen 35, 39 bzw. 37 und 41 zerspanend bearbeitet werden kann (eine Begrenzung des neuen Anfangsbereichs 11' des Halbzeugs 8 ist in Fig. 3 durch eine gestrichelte Linie angedeutet). In diesem Betriebsmodus kann ein Werkstück zweistufig in der Drehmaschine bearbeitet werden, wobei die zwei Stufen bevorzugt die Bearbeitung von zwei unterschiedlichen Seiten darstellen.

Das beschriebene Entnehmen und Einspannen kann z. B. per Hand, durch Verfahren der Spindeln und Greifen mittels der Spindeln oder mittels eines dazu eingerichteten Roboters (nicht dargestellt) erfolgen. Das Trennen der Werkstücke von den Halbzeugen erfolgt in der Regel mittels nicht dargestellter Abstechmeißel, welche z. B. an den Werkzeugrevolvern 15 bis 18 angebracht sein können.

## Patentansprüche

1. Drehmaschine (1), insbesondere eine CNC-Drehmaschine, umfassend
eine in Rotation versetzbare erste Spindel (2) zum Einspannen und Rotieren eines ersten zu drehenden Halbzeugs (8) und
eine der ersten Spindel (2) gegenüberliegende, in Rotation versetzbare zweite Spindel (3) zum Einspannen und Rotieren eines zweiten zu drehenden Halbzeugs (9),
wobei der ersten Spindel (2) ein erstes Stangenlademagazin (4) zugeordnet ist, welches dazu eingerichtet ist, das erste Halbzeug (8) durch eine erste Öffnung (6) der ersten Spindel (2) in einen zwischen den Spindeln (2, 3) befindlichen Bearbeitungsraum (10) zu fördern, und
wobei der zweiten Spindel (3) ein zweites Stangenlademagazin (5) zugeordnet ist, welches dazu eingerichtet ist, das zweite Halbzeug (9) durch eine zweite Öffnung (7) der zweiten Spindel (3) in den Bearbeitungsraum (10) zu fördern,
wobei wenigstens ein Werkzeugrevolver (15 bis 18) zur Aufnahme von wenigstens einem Werkzeug (35 bis 42) zur Bearbeitung des ersten zu bearbeitenden Halbzeugs (8) und/oder des zweiten zu bearbeitenden Halbzeugs (9) innerhalb des Bearbeitungsraums (10) angeordnet ist,
**dadurch gekennzeichnet, dass**
der wenigstens eine Werkzeugrevolver (15 bis 18) eine dritte in Rotation versetzbare Spindel (45, 46) zur Aufnahme und zur Rotation des ersten zu bearbeitenden Halbzeugs (8) und/oder des zweiten zu bearbeitenden Halbzeugs (9) aufweist,
wobei vier Werkzeugrevolver (15 bis 18) innerhalb des Bearbeitungsraums (10) angeordnet sind,
wobei zwei Werkzeugrevolver (15, 18) jeweils eine in Rotation versetzbare Spindel (45, 46) aufweisen, welche zur zeitgleichen Aufnahme und Rotation jeweils eines der zu bearbeitenden Halbzeuge (8 oder 9) eingerichtet sind,
wobei die übrigen zwei Werkzeugrevolver (16, 17) dazu eingerichtet sind, die gleichzeitig rotierenden Halbzeuge (8, 9) gleichzeitig zu bearbeiten. AS:CHT

2. Drehmaschine (1) nach Anspruch 1,
wobei die erste Spindel (2) und die zweite Spindel (3) Gleichteile sind und symmetrisch zueinander angeordnet sind.

3. Drehmaschine nach Anspruch 1 oder 2,
wobei die Werkzeugmaschine wenigstens einen Roboter umfasst,
wobei der wenigstens eine Roboter dazu eingerichtet ist, zumindest Teile des ersten Halbzeugs (8) aus der ersten Spindel (2) in die zweite Spindel (3) zu verschieben und/oder zumindest Teile des zweiten Halbzeugs (9) aus der zweiten Spindel (3) in die erste Spindel (2) zu verschieben.

4. Drehmaschine nach einem der vorstehenden Ansprüche,
wobei das erste Stangenlademagazin (4) dazu eingerichtet ist, das erste Halbzeug (8) aus der ersten Spindel (2) in eine der Spindeln (45) der Werkzeugrevolver (15) zu übergeben, und
wobei das zweite Stangenlademagazin (5) dazu eingerichtet ist, das zweite Halbzeug (9) aus der zweiten Spindel (3) in die andere der Spindeln (46) der Werkzeugrevolver (18) zu übergeben.

5. Verfahren zur Herstellung eines ersten teilbearbeiteten Werkstücks und eines zweiten teilbearbeiteten Werkstücks durch Drehen eines ersten Halbzeugs (8) und Drehen eines zweiten Halbzeugs (9) in einer Drehmaschine (1), umfassend die Verfahrensschritte:
Bereitstellen einer Drehmaschine (1) nach einem der vorstehenden Ansprüche,
Herstellen des ersten teilbearbeiteten Werkstücks mittels der Schritte
Fördern des ersten Halbzeugs (8) durch die erste Öffnung (6) der ersten Spindel (2) der Drehmaschine (1) in den zwischen den Spindeln (2, 3) befindlichen Bearbeitungsraum (10),
Einspannen des ersten Halbzeugs (8) in der ersten Spindel (2),
Versetzen des ersten Halbzeugs (8) in Rotation mittels der ersten Spindel (2) sowie
Drehen eines Anfangsbereichs (11) des ersten Halbzeugs (8) mittels eines ersten Bearbeitungswerkzeugs (35 oder 39) der Drehmaschine (1) innerhalb des Bearbeitungsraums (10); und
Herstellen des zweiten teilbearbeiteten Werkstücks mittels der Schritte
Fördern des zweiten Halbzeugs (9) durch die zweite Öffnung (7) der zweiten Spindel (3) der Drehmaschine (1) in den Bearbeitungsraum (10),
Einspannen des zweiten Halbzeugs (9) in der zweiten Spindel (3),
Versetzen des zweiten Halbzeugs (9) in Rotation mittels der zweiten Spindel (3) sowie
Drehen eines Anfangsbereichs (12) des zweiten Halbzeugs (9) mittels eines zweiten Bearbeitungswerkzeugs (38 oder 42) der Drehmaschine (1) innerhalb des Bearbeitungsraums (10);
wobei das Herstellen des ersten teilbearbeiteten Werkstücks und des zweiten teilbearbeiteten Werkstücks gleichzeitig erfolgt,
wobei ein Herstellen eines endbearbeiteten ersten Werkstücks aus dem teilbearbeiteten ersten Werkstück weiterhin folgende Schritte umfasst:
Lösen der Einspannung des ersten Halbzeugs (8) in der ersten Spindel (2) nach dem Drehen des ersten Halbzeugs (8),
Einspannen des zuvor bearbeiteten Anfangsbereichs (11) des ersten Halbzeugs (8) in einer der Spindeln (45) des Werkzeugrevolvers (15),
Abtrennen des teilbearbeiteten ersten Werkstücks von dem ersten Halbzeug (8),
Versetzen des teilbearbeiteten ersten Werkstücks in Rotation mittels dieser Spindel (45) sowie
Drehen eines noch nicht bearbeiteten Anfangsbereichs (11') des teilbearbeiteten ersten Werkstücks mittels eines der Bearbeitungswerkzeuge (40) des Werkzeugrevolvers (17) innerhalb des Bearbeitungsraums (10) und
wobei ein Herstellen eines endbearbeiteten zweiten Werkstücks aus dem teilbearbeiteten zweiten Werkstück weiterhin folgende Schritte umfasst:
Lösen der Einspannung des zweiten Halbzeugs (9) in der zweiten Spindel (3) nach dem Drehen des zweiten Halbzeugs (9),
Einspannen des zuvor bearbeiteten Anfangsbereichs (12) des zweiten Halbzeugs (9) in der anderen Spindel (46) der Werkzeugrevolver (18),
Abtrennen des teilbearbeiteten zweiten Werkstücks von dem zweiten Halbzeug (9),
Versetzen des teilbearbeiteten zweiten Werkstücks in Rotation mittels dieser anderen Spindel (46) sowie
Drehen eines noch nicht bearbeiteten Anfangsbereichs (12') des teilbearbeiteten zweiten Werkstücks mittels eines weiteren der Bearbeitungswerkzeuge (37) des Werkzeugrevolvers (18) innerhalb des Bearbeitungsraums (10).

6. Verfahren zur Herstellung eines Werkstücks durch Drehen eines Halbzeugs (8) in einer Drehmaschine (1), umfassend die Verfahrensschritte:
Bereitstellen einer Drehmaschine (1) nach einem der vorstehenden Ansprüche,
Herstellen eines teilbearbeiteten Werkstücks (50) durch Bearbeiten eines Anfangsbereichs (11) einer ersten Stirnseite des Halbzeugs (8) mittels der Schritte
Fördern des Halbzeugs (8) durch die erste Öffnung (6) der ersten Spindel (2) der Drehmaschine (1) in den zwischen den Spindeln (2, 3) befindlichen Bearbeitungsraum (10),
Einspannen des Halbzeugs (8) in der ersten Spindel (2),
Versetzen des Halbzeugs (8) in Rotation mittels der ersten Spindel (2) sowie
Drehen des Anfangsbereichs (11) des Halbzeugs (8) mittels eines ersten Bearbeitungswerkzeugs (35 oder 39) der Drehmaschine (1) innerhalb des Bearbeitungsraums (10);
Herstellen eines endbearbeiteten Werkstücks aus dem teilbearbeiteten Werkstück (50) durch
Greifen des gedrehten Anfangsbereichs (11) des Halbzeugs (8) mittels der zweiten Spindel (3),
Abtrennen des teilbearbeiteten Werkstücks (50) von dem Halbzeug (8),
Bearbeiten eines dem Anfangsbereich (11) abgewandten Endbereichs (51) des teilbearbeiteten Werkstücks (50) mittels der Schritte
Einspannen des teilbearbeiteten Werkstücks (50) in der zweiten Spindel (3),
Versetzen des teilbearbeiteten Werkstücks (50) in Rotation mittels der zweiten Spindel (3) sowie
Drehen des Endbereichs (51) des teilbearbeiteten Werkstücks (50) mittels eines zweiten Bearbeitungswerkzeugs (38 oder 42) der Drehmaschine (1) innerhalb des Bearbeitungsraums (10), wodurch das teilbearbeitete Werkstück zum endbearbeiteten Werkstück wird, und
Ausstoßen des endbearbeiteten Werkstücks aus der zweiten Spindel (3).

7. Verfahren nach Anspruch 6 weiterhin umfassend die Schritte:
Nachrücken von unbearbeitetem Halbzeug (8) in den Bearbeitungsraum (10) nach dem Abtrennen des teilbearbeiteten Werkstücks (50) von dem Halbzeug (8) und während des Bearbeitens des Endbereichs (51) des teilbearbeiteten Werkstücks (50),
Erneutes Durchlaufen der Verfahrensschritte nach Anspruch 6 ab dem Herstellen eines teilbearbeiteten Werkstücks (50) durch Bearbeiten eines Anfangsbereichs (11) einer ersten Stirnseite des nachgerückten Halbzeugs (8).

## Claims

1. Turning machine (1), in particular a CNC turning machine, comprising
a first spindle (2), which can be set in rotation, for gripping and rotating a first semi-finished product (8) to be turned, and
a second spindle (3), which is opposite the first spindle (2) and can be set in rotation, for gripping and rotating a second semi-finished product (9) to be turned,
wherein the first spindle (2) is associated with a first bar loading magazine (4), which is configured to convey the first semi-finished product (8) through a first opening (6) of the first spindle (2) into a machining area (10) located between the spindles (2, 3), and
wherein the second spindle (3) is associated with a second bar loading magazine (5), which is configured to convey the second semi-finished product (9) through a second opening (7) of the second spindle (3) into the machining area (10),
wherein at least one tool turret (15 to 18) for receiving at least one tool (35 to 42) for machining the first semi-finished product (8) to be machined and/or the second semi-finished product (9) to be machined is arranged within the machining area (10),
**characterized in that** the at least one tool turret (15 to 18) comprises a third spindle (45, 46), which can be set in rotation, for receiving and rotating the first semi-finished product (8) to be machined and/or the second semi-finished product (9) to be machined,
wherein four tool turrets (15 to 18) are arranged within the machining area (10),
wherein two tool turrets (15, 18) each comprise a spindle (45, 46), which can be set in rotation, and which are configured for simultaneously receiving and rotating one of the semi-finished products (8 or 9) to be machined, respectively,
wherein the remaining two tool turrets (16, 17) are configured to simultaneously machine the simultaneously rotating semi-finished products (8, 9).

2. Turning machine (1) according to claim 1,
wherein the first spindle (2) and the second spindle (3) are identical parts and are arranged symmetrically with respect to one another.

3. Turning machine according to claim 1 or 2,
wherein the machine tool comprises at least one robot,
wherein the at least one robot is configured to displace at least parts of the first semi-finished product (8) from the first spindle (2) into the second spindle (3) and/or to displace at least parts of the second semi-finished product (9) from the second spindle (3) into the first spindle (2).

4. Turning machine according to any one of the preceding claims,
wherein the first bar loading magazine (4) is configured to transfer the first semi-finished product (8) from the first spindle (2) into one of the spindles (45) of the tool turrets (15), and
wherein the second bar loading magazine (5) is configured to transfer the second semi-finished product (9) from the second spindle (3) into the other of the spindles (46) of the tool turrets (18).

5. Method of producing a first partially machined workpiece and a second partially machined workpiece by turning a first semi-finished product (8) and turning a second semi-finished product (9) in a turning machine (1), comprising the method steps:
providing a turning machine (1) according to any one of the preceding claims,
producing the first partially machined workpiece by means of the steps of
conveying the first semi-finished product (8) through the first opening (6) of the first spindle (2) of the turning machine (1) into the machining area (10) located between the spindles (2, 3),
gripping the first semi-finished product (8) in the first spindle (2),
setting the first semi-finished product (8) in rotation by means of the first spindle (2) and
turning a starting region (11) of the first semi-finished product (8) by means of a first machining tool (35 or 39) of the turning machine (1) within the machining area (10); and
producing the second partially machined workpiece by means of the steps of
conveying the second semi-finished product (9) through the second opening (7) of the second spindle (3) of the turning machine (1) into the machining area (10),
gripping the second semi-finished product (9) in the second spindle (3),
setting the second semi-finished product (9) in rotation by means of the second spindle (3) and
turning a starting region (12) of the second semi-finished product (9) by means of a second machining tool (38 or 42) of the turning machine (1) within the machining area (10);
wherein producing the first partially machined workpiece and the second partially machined workpiece takes place simultaneously,
wherein a production of a finished first workpiece from the partially machined first workpiece further comprises the steps of:
releasing the gripping of the first semi-finished product (8) in the first spindle (2) after turning the first semi-finished product (8),
gripping the previously machined starting region (11) of the first semi-finished product (8) in one of the spindles (45) of the tool turrets (15),
separating the partially machined first workpiece from the first semi-finished product (8),
setting the partially machined first workpiece in rotation by means of this spindle (45), and
turning a not yet machined starting region (11') of the partially machined first workpiece by means of one of the machining tools (40) of the tool turret (17) within the machining area (10), and
wherein a production of a finished second workpiece from the partially machined second workpiece further comprises the steps of:
releasing the gripping of the second semi-finished product (9) in the second spindle (3) after turning the second semi-finished product (9),
gripping the previously machined starting region (12) of the second semi-finished product (9) in the other spindle (46) of the tool turrets (18),
separating the partially machined second workpiece from the second semi-finished product (9),
setting the partially machined second workpiece in rotation by means of this other spindle (46), and
turning a not yet machined starting region (12') of the partially machined second workpiece by means of a further one of the machining tools (37) of the tool turret (18) within the machining area (10).

6. Method of producing a workpiece by turning a semi-finished product (8) in a turning machine (1), comprising the method steps:
providing a turning machine (1) according to any one of the preceding claims,
producing a partially machined workpiece (50) by machining a starting region (11) of a first front face of the semi-finished product (8) by means of the steps of
conveying the semi-finished product (8) through the first opening (6) of the first spindle (2) of the turning machine (1) into the machining area (10) located between the spindles (2, 3),
gripping the semi-finished product (8) in the first spindle (2),
setting the semi-finished product (8) in rotation by means of the first spindle (2) and
Turning starting region (11) of the semi-finished product (8) by means of a first machining tool (35 or 39) of the turning machine (1) within the machining area (10);
producing a finished workpiece from the partially machined workpiece (50) by
gripping the turned starting region (11) of the semi-finished product (8) by means of the second spindle (3),
separating the partially machined workpiece (50) from the semi-finished product (8),
machining an end region (51) of the partially machined workpiece (50) remote from the starting region (11) by means of the steps of
gripping the partially machined workpiece (50) in the second spindle (3),
setting the partially machined workpiece (50) in rotation by means of the second spindle (3), and
turning the end region (51) of the partially machined workpiece (50) by means of a second machining tool (38 or 42) of the turning machine (1) within the machining area (10), whereby the partially machined workpiece is formed into the finished workpiece, and
ejecting the finished workpiece from the second spindle (3).

7. Method of claim 6 further comprising the steps of:
advancing an unmachined semi-finished product (8) into the machining area (10) after the separation of the partially machined workpiece (50) from the semi-finished product (8) and, during machining of the end region (51) of the partially machined workpiece (50),
running through the method steps according to claim 6 again from producing a partially machined workpiece (50) by machining a starting region (11) of a first front face of the advanced semi-finished product (8).

## Revendications

1. Tour (1), en particulier un tour CNC, comprenant
une première broche (2) pouvant être mise en rotation pour serrer et faire tourner un premier produit semi-fini (8) à faire tourner et
une deuxième broche (3) opposée à la première broche (2) et pouvant être mise en rotation, pour serrer et faire tourner un deuxième produit semi-fini (9) à faire tourner,
un premier ravitailleur de barres (4) étant associé à la première broche (2), lequel est conçu pour transporter le premier produit semi-fini (8) à travers une première ouverture (6) de la première broche (2) dans un espace d'usinage (10) situé entre les broches (2, 3), et
un deuxième ravitailleur de barres (5) étant associé à la deuxième broche (3), lequel est conçu pour transporter le deuxième produit semi-fini (9) à travers une deuxième ouverture (7) de la deuxième broche (3) dans l'espace d'usinage (10),
au moins une tourelle porte-outils (15 à 18) destinée à recevoir au moins un outil (35 à 42) pour l'usinage du premier produit semi-fini (8) à usiner et/ou du deuxième produit semi-fini (9) à usiner étant disposée à l'intérieur de l'espace d'usinage (10), **caractérisé en ce que**
au moins une tourelle porte-outils (15 à 18) présente une troisième broche (45, 46) pouvant être mise en rotation pour recevoir et faire tourner le premier produit semi-fini (8) à usiner et/ou le deuxième produit semi-fini (9) à usiner,
quatre tourelles porte-outils (15 à 18) étant disposées à l'intérieur de l'espace d'usinage (10),
deux tourelles porte-outils (15, 18) présentant chacune une broche (45, 46) pouvant être mise en rotation, qui sont aménagées pour recevoir et faire tourner simultanément chacune des produits semi-finis (8 ou 9) à usiner,
les deux autres tourelles porte-outils (16, 17) étant conçues pour usiner simultanément les produits semi-finis (8, 9) tournant simultanément.

2. Tour (1) selon la revendication 1,
dans lequel la première broche (2) et la deuxième broche (3) sont des pièces identiques et sont disposées symétriquement l'une par rapport à l'autre.

3. Tour selon la revendication 1 ou 2,
dans lequel la machine-outil comprend au moins un robot,
dans lequel le au moins un robot est agencé pour déplacer au moins des parties du premier produit semi-fini (8) de la première broche (2) dans la deuxième broche (3) et/ou pour déplacer au moins des parties du deuxième produit semi-fini (9) de la deuxième broche (3) dans la première broche (2).

4. Tour selon l'une quelconque des revendications précédentes,
le premier ravitailleur de barres (4) étant conçu pour transférer le premier produit semi-fini (8) de la première broche (2) dans l'une des broches (45) des tourelles porte-outils (15), et
le deuxième ravitailleur de barres (5) étant conçu pour transférer le deuxième produit semi-fini (9) de la deuxième broche (3) dans l'autre des broches (46) des tourelles d'outils (18).

5. Procédé de fabrication d'une première pièce partiellement usinée et d'une deuxième pièce partiellement usinée par tournage d'un premier produit semi-fini (8) et tournage d'un deuxième produit semi-fini (9) dans un tour (1), comprenant les étapes de procédé :
fournir un tour (1) selon l'une des revendications précédentes,
fabriquer la première pièce partiellement usinée au moyen des étapes suivantes
transporter le premier produit semi-fini (8) à travers la première ouverture (6) de la première broche (2) du tour (1) dans l'espace d'usinage (10) se trouvant entre les broches (2, 3),
serrer le premier produit semi-fini (8) dans la première broche (2),
mettre en rotation le premier produit semi-fini (8) au moyen de la première broche (2), et
tourner une partie initiale (11) du premier produit semi-fini (8) au moyen d'un premier outil d'usinage (35 ou 39) du tour (1) à l'intérieur de l'espace d'usinage (10) ; et
fabriquer la deuxième pièce partiellement usinée au moyen des étapes suivantes
transporter le deuxième produit semi-fini (9) à travers la deuxième ouverture (7) de la deuxième broche (3) du tour (1) dans l'espace d'usinage (10),
serrer le deuxième produit semi-fini (9) dans la deuxième broche (3),
mettre en rotation le deuxième produit semi-fini (9) au moyen de la deuxième broche (3) ainsi que
tourner une partie initiale (12) du deuxième produit semi-fini (9) au moyen d'un deuxième outil d'usinage (38 ou 42) du tour (1) à l'intérieur de l'espace d'usinage (10) ;
où la fabrication de la première pièce partiellement usinée et de la deuxième pièce partiellement usinée étant réalisée simultanément,
où la fabrication d'une première pièce finie à partir de la première pièce partiellement finie comprend en outre les étapes suivantes :
desserrer le serrage du premier produit semi-fini (8) dans la première broche (2) après la rotation du premier produit semi-fini (8),
serrer la partie initiale (11) précédemment usinée du premier produit semi-fini (8) dans l'une des broches (45) de la tourelle porte-outils (15),
séparer la première pièce partiellement usinée du premier produit semi-fini (8),
mettre en rotation la première pièce partiellement usinée au moyen de ladite broche (45), et
tourner une partie initiale non encore usinée (11') de la première pièce partiellement usinée au moyen de l'un des outils d'usinage (40) de la tourelle porte-outils (17) à l'intérieur de l'espace d'usinage (10) et
dans lequel une fabrication d'une seconde pièce finie à partir de la seconde pièce partiellement finie comprend en outre les étapes suivantes :
desserrer le serrage du deuxième produit semi-fini (9) dans la deuxième broche (3) après la rotation du deuxième produit semi-fini (9),
serrer la partie initiale (12) précédemment usinée du deuxième produit semi-fini (9) dans l'autre broche (46) de la tourelle porte-outils (18),
séparer la deuxième pièce partiellement usinée du deuxième produit semi-fini (9),
mettre en rotation la deuxième pièce partiellement usinée au moyen de cette autre broche (46), et
tourner une partie initiale non encore usinée (12') de la deuxième pièce partiellement usinée au moyen d'un autre des outils d'usinage (37) de la tourelle porte-outils (18) à l'intérieur de l'espace d'usinage (10).

6. Procédé de fabrication d'une pièce par tournage d'un produit semi-fini (8) dans un tour (1), comprenant les étapes de procédé :
fournir un tour (1) selon l'une des revendications précédentes,
fabriquer une pièce partiellement usinée (50) par usinage d'une partie initiale (11) d'une première face frontale du produit semi-fini (8) au moyen des étapes suivantes
transporter le produit semi-fini (8) à travers la première ouverture (6) de la première broche (2) du tour (1) dans l'espace d'usinage (10) se trouvant entre les broches (2, 3),
serrer le produit semi-fini (8) dans la première broche (2),
mettre en rotation le produit semi-fini (8) au moyen de la première broche (2), et
tourner la partie initiale (11) du produit semi-fini (8) au moyen d'un premier outil d'usinage (35 ou 39) du tour (1) à l'intérieur de l'espace d'usinage (10) ;
produire une pièce finie à partir de la pièce partiellement usinée (50) par
saisir la partie initiale tournée (11) du produit semi-fini (8) au moyen de la deuxième broche (3),
séparer la pièce partiellement usinée (50) du produit semi-fini (8),
usiner une zone d'extrémité (51) de la pièce partiellement usinée (50), opposée à la partie initiale (11), au moyen des étapes suivantes
serrer la pièce partiellement usinée (50) dans la deuxième broche (3),
mettre en rotation de la pièce partiellement usinée (50) au moyen de la deuxième broche (3), et
faire tourner la partie d'extrémité (51) de la pièce partiellement usinée (50) au moyen d'un deuxième outil d'usinage (38 ou 42) du tour (1) à l'intérieur de l'espace d'usinage (10), la pièce partiellement usinée devenant ainsi la pièce usinée finale, et
éjecter la pièce finie de la deuxième broche (3).

7. Procédé selon la revendication 6, comprenant en outre les étapes consistant à :
avancer le produit semi-fini non usiné (8) dans l'espace d'usinage (10) après la séparation de la pièce partiellement usinée (50) du produit semi-fini (8) et pendant l'usinage de la zone d'extrémité (51) de la pièce partiellement usinée (50),
recommencer les étapes du procédé selon la revendication 6 à partir de la fabrication d'une pièce partiellement usinée (50) par usinage d'une partie initiale (11) d'une première face frontale du produit semi-fini (8) qui a été repoussé.
